# EUROPEAN PATENT SPECIFICATION

(11) **EP 3 070 630 B1**
(45) Date of publication and mention of the grant of the patent: **22.08.2018**
(21) Application number: 16020085.3
(22) Date of filing: 16.03.2016
(51) Int. Cl.: B61L 27/00, G06F 11/14, G06F 11/20, G06F 21/56, G06Q 20/40, G06F 21/10, G06F 21/60, G06F 21/62, G06Q 20/00, H04L 29/06

(54) **DATA SYSTEM AND METHOD**
DATENSYSTEM UND -VERFAHREN
PROCÉDÉ ET SYSTÈME DE DONNÉES

(30) Priority: 16.03.2015 US 201514659390
(43) Date of publication of application: 21.09.2016
(73) Proprietor: The MaidSafe Foundation, Ayr KA8 9FG (GB)
(72) Inventor: Irvine, David, Troon, KA10 6BE (GB)
(74) Representative: Norris, Timothy Sweyn

(56) References cited:
- US-A1- 2015 006 895
- US-A1- 2015 073 907

## Description

### Technical field

The present disclosure relates to data systems, for example to data systems for providing secure and robust data storage and data communication. Moreover, the present disclosure concerns methods of storing and communicating data. Furthermore, the present disclosure relates to computer program products comprising a non-transitory (non-transient) computer-readable storage medium having computer-readable instructions stored thereon, the computer-readable instructions being executable by a computerized device comprising processing hardware to execute aforementioned methods.

### Background

It is common practice for users to backup local data from their user devices onto data storage media of one or more remote computing nodes, such that user data is not lost in an event that the user devices are lost, stolen or malfunction. One form of centrally storing user local data includes contemporary *"cloud computing"* arrangements. Increasingly, data services are provided from the computing nodes, namely via aforementioned *"cloud computing".* Data services available include, for example, on-line purchasing and retailing, wherein details of user retail searching choices, purchase history and various other information are stored at the computing nodes.

Recently, *"data mining",* personal privacy and protection of data have become major political issues, and users are increasingly demanding that stricter controls regarding dissemination of their data be provided by operators. Moreover, a large commercial service industry has also arisen around mining and selling analyses of user data via, for example, contemporary social media websites, cloud-based e-mail services, etc. However, such data mining is potentially susceptible to misuse. For example, mined data may be used for purposes of blackmail or theft.

In a published patent document US20150073907A1 (Thomas Purves; "Wearable Intelligent Vision Device Apparatuses, Methods and Systems*"*), there is described a method for providing personalized information, The Wearable Intelligent Vision Device Apparatuses, Methods and Systems ("WIVD") transforms a mobile device location coordinate information transmissions, real-time reality visual capturing, mixed gesture capturing, bio-sensor data via WIVD components into real-time behavior-sensitive product purchase related information, shopping purchase transaction notifications, and electronic receipts. In accordance with the system, the WIVD may provide a personal device in the form of a pair of eyeglasses, wherein the wearer of the eyeglasses may obtain various augmented reality views. The WIVD determines a user prior behavior pattern from the accessed user profile, and obtains user real-time in-store behavior data from the user mobile device.

In a published patent document US 20150006895 A1 (David Irvine; "Distributed network system*"*), there is described a method of storing data from a first node on a peer-to-peer network. The described method is able to create a public and private key pair for a data item. The method also includes determining a hash value for the public key and assigning the hash value as a user identifier for the user of the node. Further, the method also includes storing the public key within a distributed hash table of the peer-to-peer network. The user identifier corresponds to the key for the public key within the distributed hash table.

### Summary

The present disclosure seeks to provide a data system which is operable to provide an increased degree of data security and data privacy.

Moreover, the present disclosure seeks to provide a method of operating a data system for providing an increased degree of data security and data privacy.

Furthermore, the present disclosure seeks to arrangements and configurations for using the aforementioned data system which benefit from its increased degree of data security and data privacy.

Furthermore, the present disclosure seeks to provide a system for cryptocurrencies.

According to a first aspect, there is provided a data system for providing data communication and data storage, wherein the data system includes at least one user device and a configuration of nodal elements which is operable to communicate with the at least one user device , wherein the at least one user device includes at least one wireless communication device and one or more user-wearable device, wherein the at least one wireless communication device is operable to communicate with the one or more user-wearable devices ; characterized in that
the data system is operable to communicate data which have been encrypted and obfuscated and are defined by one or more data maps that also indicate the manner in which the data have been encrypted and obfuscated;
the one or more user-wearable devices is/are operable to execute primary data chunking to generate primary data chunks,
and data obfuscating between the primary data chunks to generate primary obfuscated data chunks, for communicating data from the one or more user-wearable devices to the at least one wireless communication device, and to generate information indicative of the manner in which the data have been partitioned and obfuscated, and to include the generated information in a first data map which is stored; and
the at least one wireless communication device is operable to execute secondary data chunking to the primary obfuscated data chunks to generate secondary data chunks, and data obfuscating between the secondary data chunks to generate secondary obfuscated data chunks for transmission from the at least one wireless communication device to one or more nodal elements of the data system, and to generate information indicative of the manner in which the data have been partitioned and obfuscated, and to include the generated information in a second data map which is stored.

Optionally, the data system is implemented such that the at least one wireless communication device is spatially locally coupled to at least one user-wearable device.

Optionally, the data system is implemented such that the at least one user-wearable device includes at least one sensor for sensing in a spatial region of the at least one user-wearable device and for communicating corresponding sensor data from the at least one user-wearable device via the at least one wireless communication device for storage at one or more nodal elements of the data system.

More optionally, the data system is implemented such that the at least one user-wearable device are configured for cryptocurrency payment.

According to second aspect, there is provided a data system for providing data communication, wherein the data system includes at least one user device and a configuration of nodal elements which is operable to communicate with the at least one user device , wherein the at least one user device includes at least one wireless communication device and one or more user-wearable devices, and the at least one wireless communication device is operable to communicate with the one or more user-wearable devices ; characterized in that the method includes
(i) operating the one or more user-wearable devices to execute primary data chunking to generate primary data chunks, and data obfuscating between the primary data chunks to generate primary obfuscated data chunks, for communicating data from the one or more user-wearable devices to the at least one wireless communication device and to generate information indicative of the manner in which the data have been partitioned and obfuscated, and to include the generated information in a first data map which is stored; and
(ii) operating the at least one wireless communication device to execute secondary data chunking of the primary obfuscated data chunks to generate secondary data chunks, and data obfuscating between the secondary data chunks to generate secondary obfuscated data chunks and to transmit the secondary obfuscated data chunks from the at least one wireless communication device to one or more nodal elements of the data system and to generate information indicative of the manner in which the data have been partitioned and obfuscated, and to include the generated information in a second data map which is stored.

Optionally, the data system for providing data communication is implemented such that the at least one wireless communication device is spatially locally coupled to at least one user-wearable device.

Optionally, the data system for providing data communication includes configuring the at least one user-wearable device for cryptocurrency payment.

Optionally, the data system for providing data communication further includes supplying secondary obfuscated data chunks from one or more of the nodal elements to another user device; and providing the another user device with access to the first and second data maps for reconstituting data from the supplied secondary obfuscated data chunks.

It will be appreciated that features of the invention are susceptible to being combined in various combinations without departing from the scope of the invention as defined by the appended claims.

### Description of the diagrams

Embodiments of the present disclosure will now be described, by way of example only, with reference to the following diagrams wherein:
- FIG. 1: is an illustration of a data system of the present disclosure including a plurality of elements coupled via data communication links;
- FIG. 2: is an illustration of steps of a method of storing user data files in fragmented, encrypted and obfuscated form within a user-centric data system pursuant to the present disclosure;
- FIG. 3: is an illustration of steps of a method of retrieving user data files in de-fragmented, decrypted and de-obfuscated form within a user-centric data system pursuant to the present disclosure;
- FIG. 4: is an illustration of a data system implemented in a user-centric manner for sharing data in an obfuscated encrypted manner between a plurality of user devices of the data system;
- FIG. 5: is an illustration of generation of anonymous metadata files within the data system of FIG. 1 and their storage at one or more nodal elements for use by search engines;
- FIG. 6: is an illustration of use of the data system of FIG. 1 for remote sensing;
- FIG. 7: is an illustration of use of the data system of FIG. 1 for remote control purposes;
- FIG. 8: is an illustration of a user device implemented as a relay device and one or more near-field satellite devices which are operable to communicate with the relay device, enabling a constellation of user-variable devices to be worn by an associated user;
- FIG. 9: is an illustration of the data system of FIG. 1 used for purposes of token distribution and management; and
- FIG. 10: is an illustration of an alternative method of token distribution and management through use of a unified structured data process.

In the accompanying diagrams, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### Description of embodiments

In view of the present status of data management, there is a need for implementing a data communication system in a manner which is less susceptible to contemporary surveillance, and which is less likely to be abused by operators of servers of the system storing user data, for example, in a *"cloud computing"* environment. Moreover, there is a need for a data communication system in which users determine a degree of data mining rather than operators of servers of the data communication system. This need is not overcome by contemporary approaches to the Internet, wherein *"cloud computing"* is greatly encouraged by parties benefitting commercially from data mining.

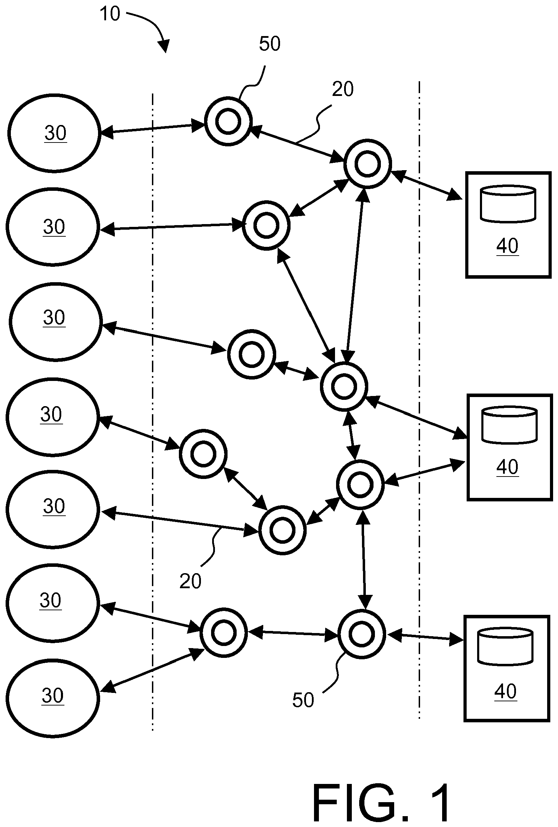

Referring to FIG. 1, a data communication system **10,** includes an arrangement of elements coupled via communication links **20.** The elements include but are not limited to user devices **30,** nodal elements **40** and routers **50.** Communication links **20** may include but are not limited to wireless links, optical fibre links, wired links and similar. The user devices **30** may include but is not limited to personal computers, mobile telephones, smart phones, tablet computers and remote cameras.

In operation of the system **10,** user data is stored in data memory of user devices **30,** as *"local data",* in data storage media of nodal elements 40 as *"remote data"* or both of these.

In overview, the present disclosure is concerned with data systems which are more user-centric. The data systems employ a configuration of elements such as that demonstrated in FIG. 1, in a manner employing novel storage and access of. In an example user-centric data system pursuant to the present disclosure, a given user has one or more of his/her user data files substantially intact only at a computing device of the given user, and/or at one or more computing devices of one or more other users respectively which the given user has allowed to receive the user data files. Elsewhere in the user-centric data system, for example at nodal elements 40, the user's data is stored in fragmented, encrypted and obfuscated form. A record of data fragmentation, encryption and obfuscation applied to each of the data fragments is recorded in an encrypted data map to which only the given user has access, or to one or more other parties to which the given user has granted permission. Due to the computational infeasibility, an unauthorized third party cannot reconstitute or regenerate the given user's data files from the fragmented, encrypted and obfuscated form to mine data, in contradistinction to known data systems in which users data is stored intact in external servers of a data network, as in contemporary *"cloud computing".*

System 10 is configured to provide a secure access for everyone (SAFE) network, for example by way of its peer-to-peer (P2P) decentralized data and communications network. Moreover, the system **10** provides, in operation, a secure and anonymous network which is implemented via spare computing resources from its users.

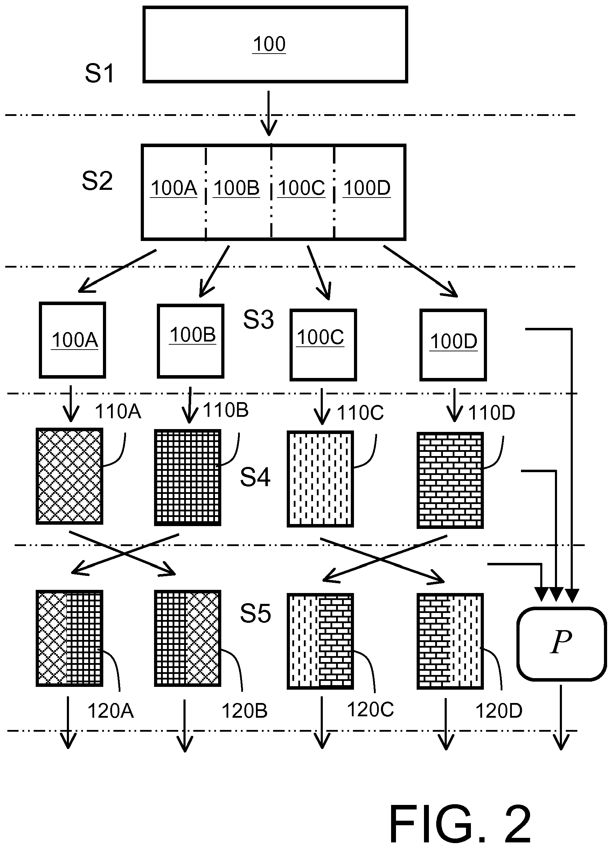

Data fragmentation, encryption and obfuscation will next be described with reference to FIG. 2. In a step S1, the given user generates a data file denoted by **100.** The data file **100** exists locally within a computing device of the given user, for example, in a personal computer (PC), a tablet computer, a smart phone, a smart wrist-worn device, etc. In an example embodiment of the disclosure, data file **100** exists only at a specific user software layer of a software operating system of the computing device of the given user. This measure prevents spyware from, unbeknown to the given user, executing at a different software layer of the user's computing device relative to the specific user software layer and gaining access to data file **100.**

In a step S2, as shown in FIG. 2, data file **100** is partitioned to generate a plurality of fragments. While for example four fragments **100A, 100B, 100C, 100D** are depicted in FIG. 2, other numbers of fragments are feasible. In one example, fragments **100A, 100B, 100C, 100D** are of similar sizes. In one example, fragments **100A, 100B, 100C, 100D** are of different sizes. In a step S3, data indicative of a manner in which the data file **100** is partitioned into fragments is recorded in a parameter file denoted by "*P*". In an embodiment, partitioning of data file **100** is implemented using a function which is seeded, or *"salted",* by one or more passwords provided by the given user.

In a step S4, the fragments produced from step S3 are subject to encryption to generate corresponding encrypted fragments. In an example, fragments **100A, 100B, 100C, 100D** are encrypted to generate corresponding encrypted data files **110A, 110B, 110C, 110D,** respectively. During encryption of fragments **100A, 100B, 100C, 100D** into encrypted data files **110A, 110B, 110C, 110D,** data indicative of the encryption applied is also included in the parameter file denoted by "*P*". In an example, a mutually similar encryption algorithm is employed to encrypt the fragments **100A, 100B, 100C, 100D** to generate the encrypted data files **110A, 110B, 110C, 110D.** In an example, mutually dissimilar encryption algorithms are employed to encrypt fragments **100A, 100B, 100C, 100D** to generate the encrypted data files **110A, 110B, 110C, 110D.** In an example, selection of the encryption algorithm employed to encrypt the fragments **100A, 100B, 100C, 100D** to generate the encrypted data files **110A, 110B, 110C, 110D** is implemented using a function which is seeded, or *"salted",* by one or more passwords provided by the given user. Although four encrypted data files are described, it will be appreciated that other numbers of encrypted data files are optionally employed.

In a step S5, encrypted data files **110A, 110B, 110C, 110D** are subject to obfuscation. In an example, obfuscation is achieved by swapping one or more bytes of data between the encrypted data files **110A, 110B, 110C, 110D,** to generate corresponding obfuscated data files **120A, 120B, 120C, 120D** respectfully. In an example, obfuscation is achieved using a simple logic function native to a data processor of the given user's computing device. For example, the simple logic function may include an XOR function. Data indicative of a manner in which the obfuscation is implemented is also included in the parameter file denoted by "*P*". Although four obfuscated data files are described, it will be appreciated that other numbers of encrypted data files are optionally employed.

Subsequently, the parameter file P and the obfuscated data files **120A, 120B, 120C, 120D** are stored on a data storage medium of the given user's computing device. Storage may be, for example, on an encrypted hard disc drive or non-volatile solid state data memory of the given user's computing device. In an example, obfuscated data files **120A, 120B, 120C, 120D** are stored on one or more of nodal elements **40.** The one or more nodal elements **40** are operable to store obfuscated data files **120** in multiple copies on the one or more nodal elements and to employ a majority voting system to detect and repair any errors arising in the obfuscated data files **120A, 120B, 120C, 120D.** In an example, the parameter file *P* is stored on a different nodal element **40** relative to one or more nodal elements **40** storing obfuscated data files **120A, 120B, 120C, 120D.** In an embodiment, parameter file *P* is stored in encrypted form, and is accessible to the given user with a password known to that user.

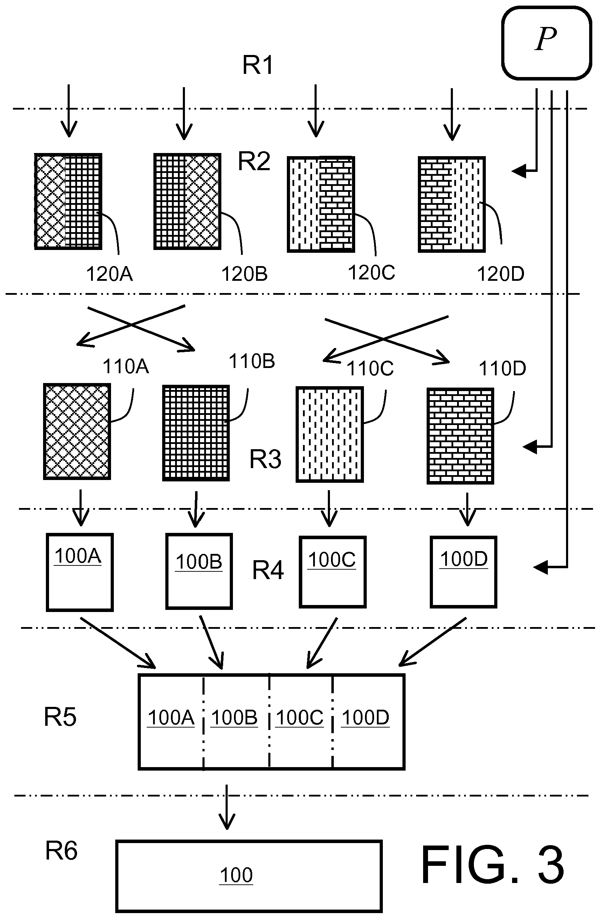

Recovery of a data file from the one or more elements **40** of the system **10** is next described with reference to FIG. 3. In a first step R1, the given user loads or otherwise recovers the parameter file *P*, which is may be stored in an encrypted state either on the given user's computing device and/or at a nodal element **40** of the network **10.** Access to the parameter file *P*, which may function as a data map, is achieved via use of at least one password known to the given user.

In a step R2, the parameter file *P* is decrypted and the locations of the obfuscated data files **120A, 120B, 120C, 120D** are determined. Obfuscated data files **120A, 120B, 120C, 120D** are recovered from their respective one or more nodal elements **40** and provided to the computing device of the given user. In a step R3, obfuscation processes used to generate the obfuscated data files **120A, 120B, 120C, 120D** are determined from the parameter file *P*, and an inverse of these processes is then applied to the obfuscated data files **120A, 120B, 120C, 120D** to regenerate corresponding encrypted data files **110A, 110B, 110C, 110D.**

In a step R4, encryption processes that were used to generate the encrypted data files **110A, 110B, 110C, 110D** are determined from the parameter file *P*, and inverses of such encryption processes are applied to the encrypted data files **110A, 110B, 110C, 110D** to generate corresponding decrypted fragments **100A, 100B, 100C, 100D.** In a step R5, a manner of fragmentation that was used to generate the fragments **100A, 100B, 100C, 100D** is determined from the parameter file P, and an inverse of such fragmentation is then applied to the fragments **100A, 100B, 100C, 100D** to regenerate the data file **100.** Again, it will be appreciated that while four fragments have been shown in FIG. 3 for simplicity of illustration, other numbers of fragments can be employed.

It will be appreciated from the forgoing that data file **100** only exists in a complete intact form within the computing device of the given user, and exists in a fragmented, encrypted and obfuscated form within the system **10,** spatially remote from the given user's computing device. Methods associated with FIG. 2 and FIG. 3 enable, for example a secure and confidential data storage arrangement or data "repository" to be provided to the given user via the system **10** in a manner which substantially renders third-party eavesdropping impossible.

System **10,** when implemented in a user-centric manner pursuant to the present disclosure, is not limited to merely functioning as a box into which users may drop their data files, as described in the foregoing, but is also operable to share data files between one or more other users. When data file sharing is performed, shared data files are only created, recovered or reconstituted at computing devices of users who have mutually agreed beforehand to share the data files. Nevertheless, system **10** is also capable of broadcasting data files to all users of the system, namely publically.

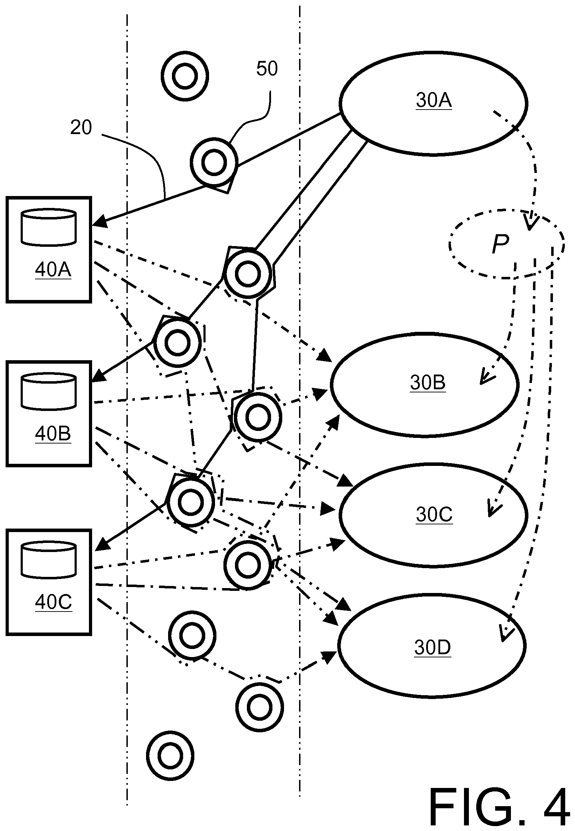

As illustrated in FIG. 4, a user of a user device **30A** may share his/her data file **100** by generating the parameter file P which is provided to other user devices **30A, 30B, 30C.** The data file **100** is fragmented, encrypted and obfuscated, as aforementioned, and obfuscated encrypted fragments of the data file **100** are stored in a plurality of nodal elements **40A, 40B, 40C.** Nodal elements **40A, 40B, 40C** are operable to supply the obfuscated encrypted fragments to other user devices **30B, 30C, 30D,** are operable to regenerate the obfuscated, encrypted fragments into replicas of data file **100**locally at these computing devices. The parameter file *P* is also provided to other user devices **30B, 30C, 30D** to enable their computing devices to regenerate the replicas of data file **100.** Optionally, the nodal elements **40A, 40B, 40C,** for example data storage devices, are implemented in a proxy manner, namely the user devices **30B, 30C, 30D** are only provided access to data storage devices, for example data servers, which mirror content of the nodal elements **40A, 40B, 40C** to which the user device **30A** has access.

The system **10** as implemented pursuant to FIG. 4 allows for secure and confidential file sharing, for example document sharing, between user devices **30.** Such a manner of operation may be implemented for document databases for large organisations whose offices and staff are spatially distributed. Moreover, such manners of operation are useful for activities which require a very high degree of confidentiality, for example legal firm management. Flows of obfuscated encrypted fragments along paths as depicted in FIG. 4 may be bi-directional. Bi-directional operation may be implemented in real-time, allowing Voice Over Internet Protocol-type (VoIP)-type telephony and video conferencing to be achieved, without a risk of eavesdropping by unauthorized third parties. In an example, encrypted end-to-end messaging, both for e-mail and Short Messaging Service (SMS) is employed for such (VoIP)-type communication. In an example, during bi-directional real-time operation, system **10** is operable to switch between a any of a plurality of different parameter files *P*, such that if any third party managing to break into the bi-directional communication, system **10** is able to reconfigure itself frequently to thwart eavesdropping. This switching of parameters may operate in a manner akin to "frequency-hopping" in conventional wireless communication systems.

In an embodiment, system **10** is operable to store, recover and share its data files by employing obfuscated encrypted data fragments, and is also operable to generate other types of related user-defined metadata files which are made available to system **10** for data mining purposes. Maintenance of system **10,** nodal elements **40** and data links **20,** requires financial resources, which, in a case of the contemporary Internet, is paid for by advertising and data mining activities. In the conventional Internet, users have little control, if any, regarding an extent of data mining which is performed on user's data. System **10** enables the user-defined metadata to be used for user-targeted advertising and data mining under the control of the users of the system **10.** For example, some users of the system will be eager to share their data as widely as possible, whereas other users will prefer to maintain a maximum degree of data security and confidentiality.

Rather than providing control to operators of servers to delete, analyze and disseminate user data stored in the servers system **10** provides control to users of the user devices **30.** However, system **10** is further provided with a management function, for example for controlling use of the nodal elements **40,** data repair when multiple copies of user fragments are stored at the nodal elements **40** without any information about what the user fragments concern. In a majority-voting arrangement employed to detect data errors, if a given user's data fragment is stored in multiple copies, in an event that a first copy of the multiple copies deviates from two more mutually similar copies, the first copy is determined by system **10** to be in error. Such error is, may be corrected in system **10** by overwrite the first copy with either of the other copies. Other majority-voting arrangements such as parity-bit checking may be employed. If a given nodal element 40consistently results in data error from, for example, a fault in one or more of its hard disc drives or a malware infection, the given node is recorded by the system **10** as a bad node, and data provided from user devices **30** is directed to other nodes recorded as being reliable. In one example, this recording is implemented gradually via a ranking mechanism.

System **10** may be configured to function in a peer-to-peer (P2P) manner, in which user devices send their data fragments as data into a communication network of the system **10** with an indication of a nodal element **40** in which the data is to be stored, and the network passes the data in a peer-to-peer manner, until the data reaches the specified nodal element **40** Nodal element **40** may be defined by a form of resource locator resembling a URL as in conventional HTTP. However, other types of communication protocol may be employed. Use of a peer-to-peer network configuration for the system **10** removes control from any manager of system **10** and in favour of the users of devices **30.**

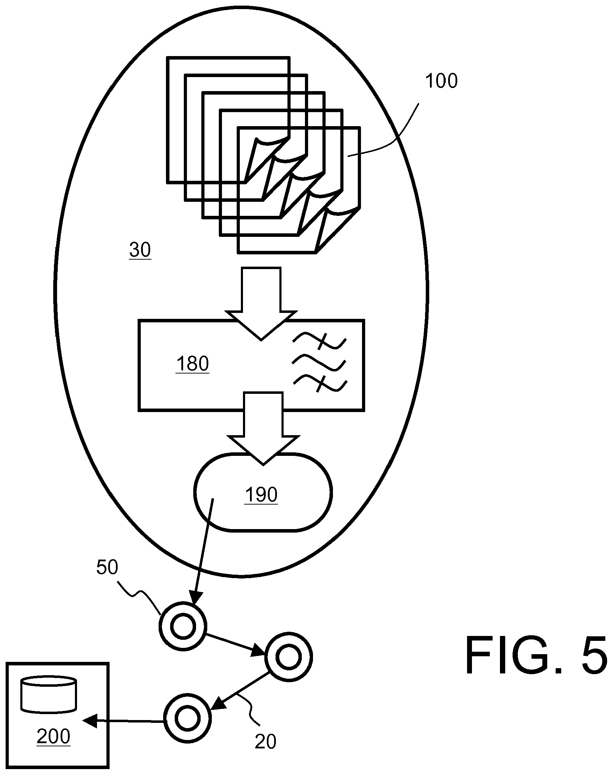

In data system **10,** data files **100** are only present in complete form at the devices **30** and otherwise exist only in a fragmented, obfuscated and encrypted manner elsewhere in the data system **10,** as aforementioned. In an embodiment, user devices **30** may include one or more data filters **180,** as illustrated in FIG. 5. In an example, data filters **180** may be implemented as one or more executable software applications ("*Apps*"), which are operable to process complete users' intact data files **100** at their user devices **30** and generate corresponding metadata files **190** which are communicated from the user devices **30** to one or more nodal elements **200** or **40** of the system **10.** Data filters **180** are implemented to selectively transmit metadata files **190** therethrough, to one or more nodal elements **200.** In an example, information content being selectively transmitted through the one or more data filters are determined in accordance with parameters such as keywords and thresholds for selected by the user, so that users are capable of controlling a degree of confidentiality provided by data system **10.** As such, users of system **10** have control regarding a degree of data mining and analysis applied to their data files

Metadata collected at the one or more nodal elements **200** or **40** of data system **100** may be used for targeted advertising purposes for sending advertisements to one or more of user devices **30.** Advertisers engaging such advertising may pay a fee to support operating costs of the one or more nodal elements **40** storing obfuscated, encrypted fragments on behalf of user devices **30.** A portion of an advertising fee may be paid to one or more users of system **10.** Moreover, metadata may be used for search engines which support operation of the data system **10.**

Metadata is automatically generated in the user devices **30** by performing a statistical analysis of words occurring in one or more texts in the data files **100,** and/or by performing image matching of images occurring in the data files **100** with reference images stored locally in the user devices **30** or downloaded from a remote database. When the statistical analysis of words is performed, frequently occurring words are filtered out, and only less frequently occurring words are included in the corresponding metadata; and such a manner, significant nouns, adjectives, adverbs and verbs are isolated for inclusion in the metadata. Thresholds applied in combination with the statistical analysis are user-controllable, thereby enabling users to control a degree of confidentiality of their data files **100** relative to corresponding metadata.

The system **10** is operable to detect any unexpected data flows associated with activities of Spyware, Adware and other malware, and to alert users of devices **30** accordingly. Data flows occurring from the at least one user device in operation are monitored and detected discrepancies between size and/or temporal characteristics of the monitored data flows and expected size and/or temporal characteristics of data flows from the device are used to uncover malware.

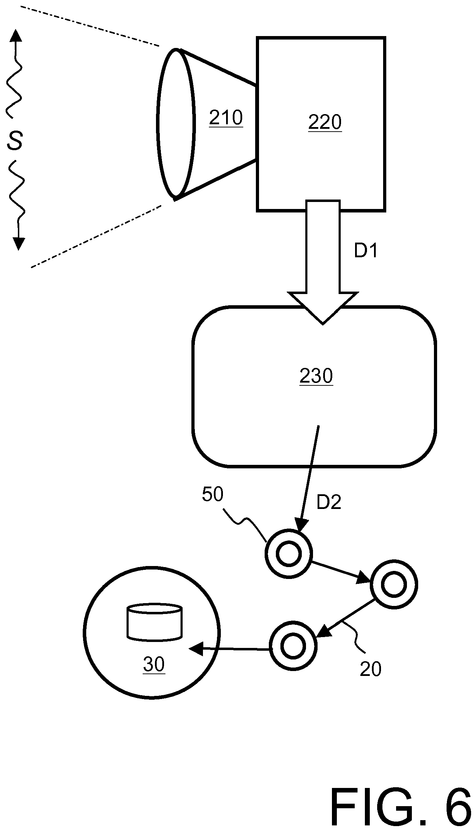

System **10** is suitable for use in remote sensing applications where confidentiality and reliability of captured data are critical and where that data is provided from a multiplicity of camera sources. User devices **30** may take the form of one or more cameras. Referring to FIG. 6, an image of a scene **S** is projected via one or more optical components **210** onto an optical sensor **220** such as a CCD or CMOS pixel sensor array, which generates corresponding data D1 depicting scene S. Data D1 is provided to processing hardware **230** which is operable to fragment the data D1, and then apply encryption and obfuscation processes to the fragmented data to generate corresponding obfuscated, encrypted data fragments D2 which are communicated through routers **50** and links **20** to one or more associated user device **30.** Obfuscated, encrypted fragments D2 may additionally or alternatively be recorded at one or more nodal elements **40** for future reference. For example, images encoded in data D1 may provide legal evidence of a robbery usable in legal trials. As with user devices 30, processing hardware **230** is operable to generate a corresponding parameter file "*P*" as part of the fragmenting, obfuscating and encrypting processes.

This enables users to remotely monitor their homes, and other property in a confidential manner incompatible with third-party eavesdropping.

System **10** is suitable for providing an alternative to contemporary fiat currency systems and is also capable of being used for handling derivative contracts, namely "derivatives". When records of derivatives contracts are stored via use of obfuscated encrypted fragments of data in one or more nodal elements **40** of system **10,** there is thereby provided a more reliable foundation for performing derivatives transactions. By way of nodal elements **40** having their data duplicated in a plurality of data storage sites and majority-voting error correction being employed for data stored at one or more nodal elements **40,** a very high degree of data storage reliability in system **10** may be achieved.

System **10** may be managed in order to reduce response times for user devices **30.** Data flow management within the system **10** is implemented in a distributed and/or a centralized manner.

In a first manner of operation, when routers **50** and links **20** are implemented pursuant to *http* IP protocol, for example, data flows via routers **50** are reported to a control facility of system **10** that then sends control information to the one or more user devices **30,** for enabling them to send their obfuscated encrypted fragments via alternative routers **50** which are less loaded with data flow. Alternatively, in a second manner of operation, data flows via the routers **50** are reported directly to one or more user devices **30** sending data to them for enabling the one or more user devices **30** to select alternative routes to send their obfuscated encrypted fragments. Optionally, a combination of the first and second manners of operation is employed within the data system **10.** Similar consideration also pertains to the one or more nodal elements **40,** when they are sending obfuscated encrypted fragments back to the one or more user devices **30.** To avoid abuse by third parties desirous to eavesdrop upon the data system **10,** routes of data flows of obfuscated encrypted fragments through the routers **50** may be monitored and unexpected diversion of obfuscated encrypted fragments may be flagged as a potential eavesdropping event, and one or more alternative data communication routes through the routers **50** and data links **20** may be selected to thwart such eavesdropping.

The data system **10** is well adapted for providing video-on-demand by way of use of obfuscated encrypted fragments, representative of video content, present at the one or more nodal elements **40** which are supplied on demand, for example in exchange for consideration, for example one or more payments, from the one or more user devices **30.** Such supply of video content may be achieved by supplying an appropriate parameter file *P* to the one or more user devices **30.** On receipt of the parameter file *P*, the one or more user devices **30** are operable to retrieve appropriate obfuscated, encrypted fragments and reassemble them, in a manner previously elucidated with reference to FIG. 3. In an example, one or more of the obfuscated encrypted fragments are made specific to a given user device **30** that has requested the video content, such that the video content, when reassembled at the given user device **30** is watermarked with one or more visual references which are specific to the given user **30.** In an example, the one or more visual references are momentary or otherwise transient, and thus not noticed by viewers, or are overlaid as a subtle watermark, for an extended period of playing. In an event that the given user makes a copy of the video content, for as presented on a screen of the given user device **30,** or extracted at a software level from screen video driver software of the given user device **30,** the watermarking information is also copied and allows the given user, for example a content creator, to be identified from the copies. In an example, additional watermarking information is added at the given user device **30** to that provided in obfuscated encrypted fragments provided from the one or more nodal elements **40** of the data system **10.**

Use of the parameter file *P* provided to the one or more user devices **30** in association with given video content provided via supply of obfuscated encrypted fragments enables the obfuscated encrypted fragments to be sent to nodal elements **40** deployed in a spatially distributed manner, near to the one or more user devices **30**; and the associated parameter file *P* for accessing the block-buster film to be provided to the one or more user devices **30,** wherein the obfuscated encrypted fragments are accessed from nodal elements **40** which are connection-wise substantially nearest to each of the one or more user devices **30.**

In this arrangement, data traffic within data system **10,** via communication links **20** and routes **50,** is reduced, provided that user devices **30** are provided substantially with obfuscated encrypted fragments from nodal elements **40** which are spatially closest thereto. In this respect, the parameter files P provided to user devices **30** are made user-device-specific, depending upon connection positions of user devices **30** within data system **10.** Use of the parameter file P to enable access to video enables access to the video to be controlled.

Data system **10** facilitates overlay of second data content onto other first data content, for example, when a temporal sequence of video images from a second source are to be overlaid onto a temporal sequence video images from a first source to generate a composite video content. For example, data system **10** may be operable to provide a music performance environment for user devices **30,** and their associated one or more users, wherein a user of a given user device **30** receives a first parameter file *P1* to enable obfuscated, encrypted fragments relating to a music backing track to be downloaded to the given user device **30** and reassembled thereat to provide the back track at the given user device **30.** In an example, the user of the given device **30** makes a payment for receiving first parameter file *P1*. In an example, parameter file *P1* includes identifying information of the given user device **30** which is uniquely present as a form of watermark in the music backing track. In an example, the identifying information in parameter file *P1* is included in subsequent parameter files, for example in a parameter file *P2* which will be described below.

The backing track is played at the given use device **30** concurrently while the given user device **30** is used to record an overlay solo track to overlay temporally onto the backing track to provide a composite music track at the given user device **30.** Thereafter, the composite music track is fragmented, encrypted and obfuscated, for example in a manner as depicted in FIG. 2, and stored in nodal elements **40,** and a record is made at one or more of the nodal elements **40** of a parameter file *P2* pertaining to the composite music track. In an example, additional tracks may be overlaid onto the composite music track to generate further, more complex, music tracks. In an example, parameter file *P2* includes information indicative of an identity of the backing music track, information indicative of downloading the backing track to the given user device **30,** and information indicative of the given user device **30** having overlaid a solo track onto the backing track to generate the composite music track. Thus, by recording parameter files *P1, P2* and any later parameter files *P_{N}* for further music content with more overlaid music tracks, at a nodal element **40** of data system **10** responsible for royalty payments and copyright enforcement, such a manner of operation of the data system **10** provides for a music environment wherein musicians are able to add their music tracks onto other music tracks, and then publish their composite musical creations. In an example, publication of musical creations, may return royalty payments and/or advertising of their musical talent. Data system **10** is capable of being used in a similar manner for video content, pursuant to an embodiment of the present disclosure.

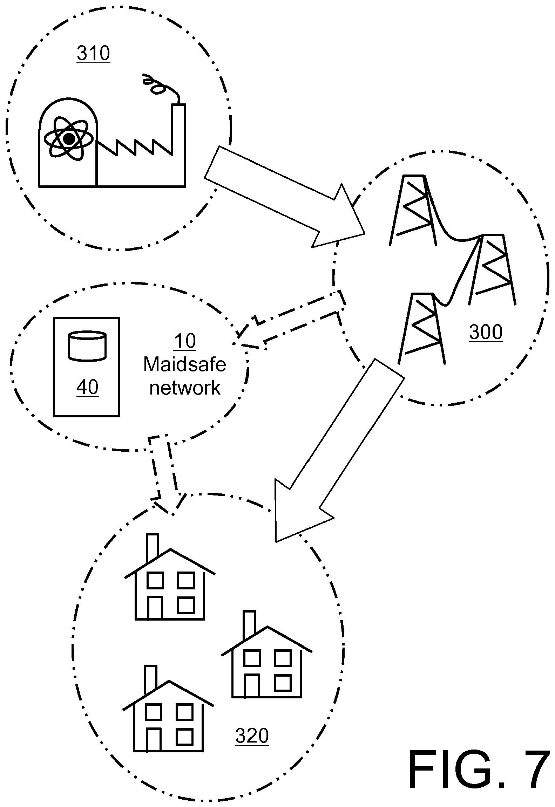

On account of its use of obfuscate encrypted fragments of data file, as well as its data duplication and error correction processes implemented at the one or more nodal elements **40,** the data system **10** is capable of providing the confidential and reliable data communication provided by data system **10** enables use of system **10** for smart grid purposes, as illustrated in FIG. 7. Power generated by one or more generators **310** is coupled via an electrical power grid **300** to one or more consumers **320.** In operation, a need arises within the electrical power grid **300** to match power supplied from generators **310** with demand from consumers **320,** for example domestic and/or commercial premises. Both supply of power from generators **310,** and power consumed by consumers **320** can be potentially highly variable. It will be appreciated that balancing power generation with power demand in respect of a complex electrical power distribution network is not a trivial task. Changing weather conditions influence an amount of power which is generated by renewable energy sources. Uranium or MOX solid-fuel nuclear reactors must operate at full power, otherwise build-up of Xenon and Krypton gas on fuel rods at lower fuel rod operating temperatures results in unstable absorption of neutron flux and unstable operation.

Smart electrical meters are often Internet-enabled so that they may send and receive information n via the Internet. For example, such smart meters are operable to measure cumulative power consumption within a house, and then send such cumulative power consumption information to an electric supply company for periodic invoicing purposes. Moreover, such power meter also enables instructions to be sent to houses, for performing load shedding when the electrical power grid **300** is heavily overloaded, namely during period of peak power demand. However, such a conventional configuration is potentially susceptible to cyber-attack; for example, an entire national power grid could be destabilized causing a general blackout or brownout by an Internet virus which affects the smart meters. Embodiments of the present disclosure address sending grid power balancing commands to consumers **320** via data system **10** using obfuscated encrypted fragments of data. Data system 10 offers greater security of information regarding power consumption at consumers **320.** When load-shedding commands from a controlling authority responsible for keeping grid **300** in power balance are communicated via data system **10** to consumers **320** greater security is available. When employed to send power balancing and load-shedding commands, data system **10** may be operable to aggregate consumption information obtained from consumers **320** in a confidential, reliable manner, to generate aggregated power information. Aggregated power information may be later used to improve power balance within grid **300.**

In a similar manner to electric power grid **300** of FIG. 7, data system 10 may find use as a control for other types of spatially distributed apparatus.

In a traffic control system with traffic lights configured to wirelessly receive control signals from a traffic control centre, traffic flow may be managed and commends may be sent from the traffic control center to the traffic lights via data system **10.** Traffic light control commands communicated to the traffic lights in an obfuscated, encrypted, fragmented manner avoid third party tampering. New traffic lights may be easily added, and traffic flows can be readily controlled from the aforesaid traffic control centre in emergencies.

In a railway control system with spatially distributed railway signs, level crossing barriers and railway track points wirelessly coupled to a railway control centre, data may be communicated between the railway control centre and the spatially distributed components in an obfuscated, encrypted, fragmented manner to protect data communication confidentiality and data communication robustness.

Data system **10** may be employed when a highly robust, confidential and large-data-capacity storage of data is required. Data system 10 may be employed for use with database booking systems used for travel bookings, car hire and stock control; confidential voting systems; digital libraries; and remote schooling for educational establishments.

Network-based computer games, which are played interactively in real-time by a plurality of players require sharing data content between a plurality of players. For example, background video information and playing character symbols and outlines are shared so that each player experiences a consistent game reality. This shared data may be provided to the plurality of players in an obfuscated encrypted manner, for example as depicted in FIG. 3. When implemented in a network-based computer game, a hosting arrangement at one or more of nodal elements **40** provides one or more parameter files to the plurality of players when a given game is activated and played. When the players receive one or more parameter files they are able to upload background video information, games software and data fields for recording scoring and are then able to start game play. Data is exchanged between players during game play so that character symbols and outlines move in a mutually coordinated manner This exchanged data is either communicated directly between one or more user devices **30,** and/or is communicated in an obfuscated, encrypted manner referred to in FIG. 2 and FIG. 3. Scores resulting from playing games between the one or more players may be stored in an obfuscated, encrypted, fragmented manner in one or more of nodal elements 40, such that a best player performance recorded there optionally invokes payments for outstanding game-playing performance by one or more of the plurality of players.

In other embodiments, system **10** may be used by hospital databases, police databases, relief aid organisations, and/or search engines.

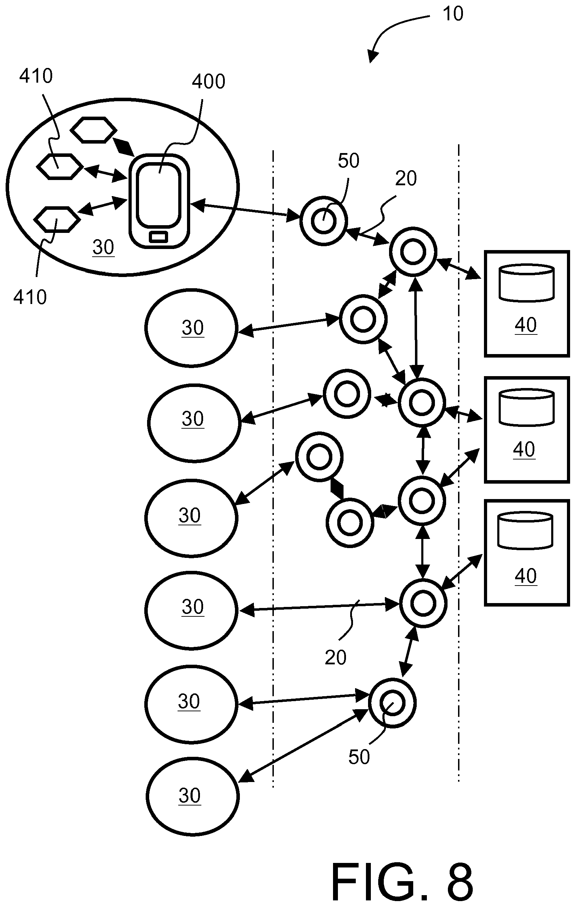

User devices **30** may be implemented, at least in part, as user-wearable devices, for example as arm bands, wrist-worn devices or even incorporated into user clothing. In an example illustrated by FIG. 8, a given user device **30** is implemented as a wireless communication device **400,** such as a smart phone, which is operable to communicate with one or more user-wearable devices **410,** for example via wireless communication employing BlueTooth™ or Zigbee™ protocol. When system **10** is implemented in such a manner, users may employ user-wearable devices **410** as multiple sensors distributed over their bodies, allowing, for example, remote sensing and/or recording of health status while maintaining user confidentiality. Moreover, user device **30** may be implemented such user-wearable devices **410** execute primary data chunking to generate primary data chunks and data obfuscation between the primary data chunks to generate primary, obfuscated data chunks. Wireless communication device 400 may receive the primary obfuscated data chunks, and executes secondary data chunking to the primary, obfuscated data chunks to generate secondary data chunks and data obfuscation between the secondary data chunks to generate secondary, obfuscated data chunks for transmission from wireless communication device **400.** Multiple stages of data chunking and obfuscation involve use of a plurality of data maps for use when reconstituting the secondary obfuscated data chunks to regenerate corresponding original data of the one or more user-wearable devices **410.** Thus, spatially local eavesdropping of data flows between wireless communication device **400** and the one or more user-wearable devices **410** is prevented. When one or more of the one or more user-wearable devices **410** are configured for cryptocurrency payment, for example, as a wrist band which the given user offers to a payment terminal when making cryptocurrency payment preventing eavesdropping can prevent theft.

In an embodiment, a user-wearable device 410 in the form of a wrist band includes a camera for capturing a short video clip of a given cryptocurrency transaction and the short video clip is recorded remotely, confidentially and securely within system **10** for subsequent recall as proof the transaction was made. User device **30** may be implemented as a wireless communication device **400** as described here, or as a fixed-installation with its associated one or more user-wearable devices **410.** As examples, a user-wearable configuration of system **10** may be used by police, emergency services, rescue services, medical services where confidential information collection is necessary to protect user confidentiality and privacy.

In another related aspect of the present disclosure, the system **10** may be implemented to provide a decentralized network token exchange system.

Tokens of the exchange system provide their holder, with perceived economic or social benefit in return for acting out defined and desired actions.

User are able to contribute to operation of the system **10** by way of, for example, tokens, as aforementioned. Tokens may be cryptographic tokens of system **10,** wherein the token is employed to encourage users and contributors to the system. Distribution of tokens is handled entirely by the network on a per use basis. Each token has its own unique identity and is required to access services on the network of the system **10.**

In the system **10,** tokens, may be obtained through one or more of *farming,* assisting with maintaining underlying code of system **10,** creating software applications for system **10** and purchasing using a fiat currency such as US dollar, or European Euro.

During *farming,* users of the system **10** provide computing resources, such as bandwidth, data storage space and CPU processing capacity to system **10.** For example, when a given user creates his/her credentials, he/she sets up a token wallet within system **10,** with a network client. The wallet is cryptographically linked to the user's account hosted by system **10.** In system **10,** the token farming rate is a result of a network rate, wherein tokens are issued to a successful node, for example user, as data is retrieved from it (GETS), as opposed to when data is stored there (PUTS).

System **10** may increase token farming rewards, as increased computing resources are required for operating system **10.** and similarly reduce token farming rewards as capacity of the network becomes abundant. Thus, the farming rate is dynamically variable in response to operating conditions of system **10.** Data is substantially evenly distributed in the network of the system **10,** and thus farmers of tokens seeking to increase their earnings may consider running several average nodal elements **40,** rather than one high-specification node.

As part of token distribution, system **10** employs a proof of resource process, operable to validate, in a continuous manner, who and what is providing resource to system **10.** Validation is implemented in a mathematically verifiable manner. In other words, validation is performed during attempts to store data chunks onto and retrieve data chunks from nodal elements **40,** respectively. Ability for a given node being validated to implement such storage and retrieval operations is dependent upon a combination of CPU speed, bandwidth availability, unused data storage capacity and online-time when coupled to communicate with system **10.** In one embodiment, system **10** employs a *"zero knowledge proof mechanism",* wherein the content of data to be checked need not be known, but the data must be known to be actually held and not subject to data corruption and damage. Nodes that are either unreliable or that are known to be removing previously provided resources, are de-ranked by the network, thereby removing their ability to perform farming of tokens.

Core developers, namely users who are able to develop an underlying network for the system **10,** are able to earn tokens for their efforts. As core developers create and release new software applications, they code their token wallet address into their software applications, to receive rewards for their efforts. Issuing of tokens may be dependent upon, for example, how successful the software applications are for users of system **10.** In an example, the success of a software application may be determined as a function of number of user accessing the software applications and/or number of downloads of the software applications.

System **10** employs decentralized, peer-to-peer (P2P) exchanges when in operation so as to provide users with an opportunity to buy tokens. Moreover, the exchanges serve as platforms for enabling a given buyer and a given seller to trade mutually directly, using a multi-signature approach. For example, three or more private keys are associated with an address, and a majority of parties holding such private keys must sign to make a given associated transaction valid. Alternatively, or additionally, system 10 is configured to support centralized exchanges for trading tokens. Such exchanges may support conversion of tokens to other types of crypto-currencies. IToken value may be determined by a market created within an environment of the system **10** for such tokens. Such a market is subject to economic forces of supply and demand.

In an embodiment, system **10** employs a transaction manager. For token transactions within system **10,** only past and current owners of a given token are known thus enabling a high degree of anonymity comparable to real, physical fiat currency. A transaction manager may be an entity or role carried out by vaults of system **10** used to store data pertaining to a given farmer's computer. A vault comprises a series of processes or roles that vary between managing storage of data, managing other vaults and managing processing and completion of token transactions.

In an embodiment of system **10,** the token network reaches decisions based on a consensus of a close group of nodal elements **40,** and the transaction manager is a trusted group of nodal elements closest to any given transaction identity. Close groups, may be chosen or selected by system **10** based upon the closeness of node ID's in respect of a given token. Closeness may refer, for example, to an XOR distance, or to a geographical distance.

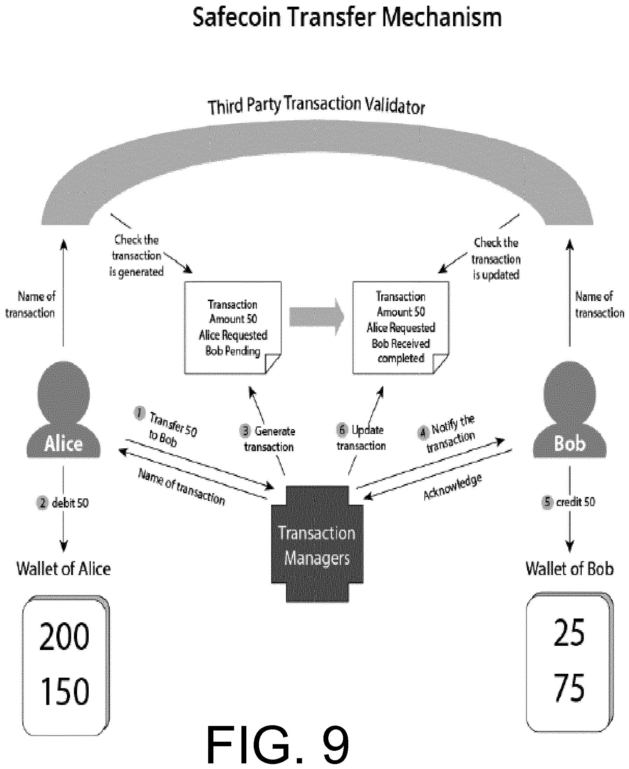

Referring next to FIG. 9, there is provided an illustration of a token transaction mechanism employed within system **10.** One or more transaction managers mediate between users *"Alice"* and *"Bob"* regarding a payment of 50 tokens. Four steps are performed by the mechanism. In a first step, S1, a request is sent from Alice to the one or more transaction managers that a 50 token payment to Bob is to be implemented. In a second step S2, the one or more transaction managers generate conditions for a transaction to occur. In a third step S3, transaction information is updated. In a fourth step S4, Bob is notified of the transaction of 50 tokens as having been implemented.

Within system **10,** transfer of data may be atomic, using a cryptographic signature to demonstrate that a last person, for example the user Alice, who owned a given token has signed the given token over to a current owner, for example to the user Bob. When the current owner desires to spend the given token, the current owner asks a network, for example their close group of 32 nodes, to accept a signed message transferring ownership to a subsequent user, namely to a new owner of the given token. Knowledge of ownership of the given token is kept in a plurality close groups, and each group is operable to agree upon and reach consensus on the transfer of ownership of the given token before the transaction of change of ownership of the given token is processed. For example, 28 of 32 nodes must be in mutual agreement. In this way, double spending of a given token may be avoided.

In system **10,** generation of tokens, namely *minting* of tokens, is achieved by registering a special type of transaction with the one or more transaction managers. The special type of transaction facilitates transfer of the ownership of a given token to any user that acknowledges the transaction. For example, when user Alice wants to mint a token, she sends a request to transfer the token to anyone. Once the one or more transaction managers have confirmed by consensus that Alice is the current owner of the given token, they will then generate the transaction, for example, in a manner as depicted in FIG. 9. When Alice receives a transaction name from the network, she is able to store it on a data storage device such as an external data storage device such as a USB drive, together with a special validation signature which has been used as a salt when requesting transfer of the given token. This salt which may be, for example, one or more salt values generated from a salt value generating function, prevents the one or more transaction managers themselves trying to acknowledge the transaction for purposes of attempting to steal the given token.

When user Bob receives the minted token, he reads the transaction name and the validation signature from the storage device and then sends an acknowledgement to system **10.** Once the one or more transaction managers receive the acknowledgement, the transaction will be updated, thereby completing the transfer of the ownership of the given token from user Alice to user Bob. In such a manner of operation, Alice does not need to keep her secret key safe, because the transaction is pre-generated. As such, theft of a given private key does not necessarily indicate loss of an associated token.

Tokens of the disclosed implementation of system 10are network-led, backed by data, and generated dependent upon retrieval of data from nodal elements 40, and token transactions can be implemented rapidly.

Tokens can be employed within system **10** for paying for various products and services. For example, tokens can be used to pay for films on a cost-per-frame basis, with a given user only paying for what the given user watches. Similar payment arrangements can be employed for music content and blogging. Token payments may be linked to contemporary copyright laws, so that content creators are compensated for their creative effort.

Token payments are, for example, made by users employing their user-wearable devices compatible with system **10,** as described in the foregoing.

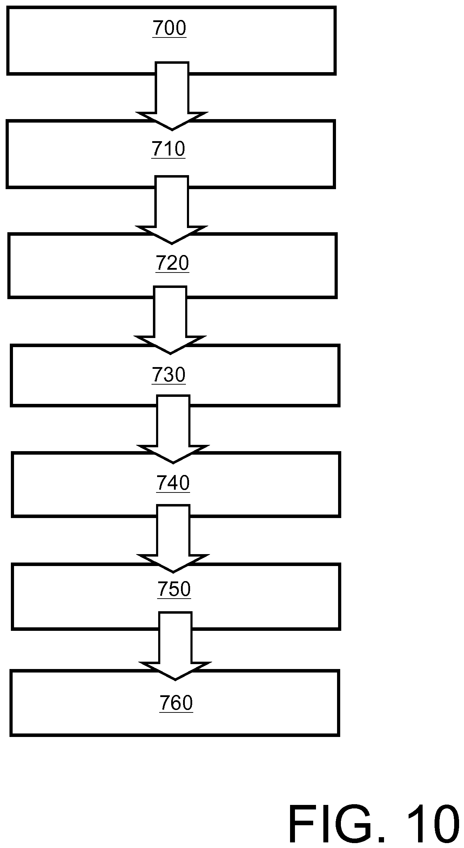

Referring next to FIG. 10, there is provided an illustration of a token transaction mechanism employed within system **10.** An unified structured data process is used to transfer the virtual currency referred to as a safecoin. When transferring safecoins, system **10** is operable to recognize only two primary data types, namely immutable data and structured data. When communicated within system **10,** these types of data have *tag_ids,* namely tag identifications, associated therewith, for allowing them to contain several mutually different data types that can be used in system **10** by users. *ImmutableData* has already two sub-types, namely *Backup* and *Sacrificial.* Optionally, these mutually different types of data are defined in a routing library of system **10,** for allowing users of the library to use type_tags to create their own types and actions on those types.

By employing such an approach to data types, there are provided benefits of reducing network traffic, by removing an indirection, of looking up a value and using that as a key to lookup next, and also to remove complexity from system **10,** thereby increasing security in operation of system **10.**

Another advantage provided by operating system 10 in such a manner is that system **10** becomes more extendible in operation. In networks such as SAFE for instance, client app developers can define their own types, for example a fix protocol for financial transactions, and instantiate this type within system **10.** For users creating their own network they may white list or blacklist types and *type_id's* as they wish, but the possibility would exist for network builders of new networks to allow extensibility of types.

*ImmutableData* is fixed self-validating non-mutable data chunks within system **10.** These chunks require *StructuredData* types to manipulate information. Moreover, these structured data types may then create a global application acting on a key value store with very high degrees of availability and security, namely they create network scale apps. Such apps optionally include medical condition analysis linked with genomic and proteomic sequencing to advance health based knowledge on a global scale.

As these data types are now self validating and may contain different information, such as new protocols, rdf/owl data types, a limit of new data types and ability to link such data is extremely scalable. Such protocols beneficially encompass token-based systems, namely a form of 'crypto-currency', linked data, natural language learning databases, pre-compilation units, distributed version control systems, and so forth.

Such an aforementioned scheme potentially allows for global computation types, optionally a Domain Specific Language (DSL) that allows for defining of operator types to allow one or more combinations of functions. The operator types are beneficially made monotonic and allow out-of-order processing of programs, namely disorderly programming, which in itself presents an area that are potentially well aligned with decentralised *'intelligence'* efforts. Linked with 'zk-snarks' to alleviate any 'halting problem' type issues, then a global Turing complete programming environment that optionally acts on semantic ('owl' / 'json-ld' etc.) data is feasible for system **10** when in operation.

Use of structure data types in system **10** entails reducing all StructuredData types to a single type, therefore making it possible to be recognised by a network of system **10** as *StructuredData* and all such sub-types handled exactly in a similar manner.

An example of StructuredData is as follows:
struct StructuredData { tag_type : TagType, // 8 Bytes ? identifier : NameType // 64Bytes (i.e. SHA512 Hash) data : mut Vec<u8>, // in many cases this is encrypted owner_keys : mut vec<crypto::sign::PublicKey> // n * 32 Bytes (where n is number of owners) version : mut u64, // incrementing (deterministic) version number previous_owner_keys : mut vec<crypto::sign::PublicKey> // n * 32 Bytes (where n is number of owners) only required when owners change signature : mut Vec<Signature> // signs the 'mut' fields above // 32 bytes (using e25519 sig) }

Fixed fields, namely immutable fields, of immutable data optionally include:
tag_type; and
identifier

In respect of data validation within system **10**:
(i) To confirm name, namely storage location on network, there is used SHA512(tag_type + identifier). As these are much smaller than the hash, it prevents flooding of a network location of system **10**;.
(ii) To validate data, there is confirmed a signature using hash of (tag_type + version) as nonce. Initial Put does not require this signature, but does require the owner contain a value;
(iii) If previous owners are set, then the signature is confirmed using those keys, namely allows owner change/transfer and so forth. In such case, the previous owners are only required on first update and is optionally remove in a next version if the owners are not changed again; and
(iv) To confirm sender of any Put , namely store or overwrite, then a check is made that the signature of sender is using a mutually same mechanism. For multiple senders of system **10,** there is confirmed that at least 50% of owners have signed the request for Put

When Put on the network of system **10,** this type is StructuredData with a subtype field. The network ignores this subtype except for collisions. No two data types with the same name and type can exist on the network.

These types are stored in a disk based storage mechanism such as Btree at the NaeManagers (DataManagers) responsible for the area of the network at that name.

These types will be limited to 100kB in size; in comparison, Immutable Chunks are also limited to 1MB.

If a client of system **10** requires these be larger than 100kB, then the data component will contain a (optionally encrypted) data-map that can be used to retrieve chunks of the network.

The network will accept these types if Put by a Group and contains a message signed by at least 50% of owners as indicated. For avoidance of doubt, two owners would require at least 1 having signed, 4 owners would require at least 2 and so froth for majority control, and there would have to an odd number of owners. Thus, beneficially, any Put must obey the mutability rules of these types.

To update such a type the client will Post direct (not paying for this again) and the network will overwrite the existing data element if the request is signed by the owner and the version increments. To update a type then there must be an existing type of the same Identity and type whose owners (or optionally previous owners) includes at least a majority of this new type.

For private data, the data filed will be encrypted, for example at client discretion; for public data, this need not be the case as anyone can read such public data, but only the owner of the data can update it.

From a user perspective when using system **10,** a following method is beneficially employed:
(i) Step 1, **700:** Decide on a *type_tag* for a new type of data;
(ii) Step 2, **710:** Use whichever mechanism to create an Identity for this type of data;
(iii) Step 3, **720:** Serialise any structure into Vec<u8> and include in data field; for example, there can be any structure that is serialisable.
(iv) Step 4, **730:** Store on network via routing::Put(Identity: location, Data:: Structured Data : data, u64: type_tag);
(v) Step 5: **740:** Get from a network of system **10** via routing::Get(Identity: name, Data::type : type, u64: type_tag);
(vi) Step 6: **750:** Mutate on network via routing::Put(Identity: location, Data::Structured Data : data, u64: type_tag);
(vii) Step 7, **760:** Delete from network via routing::Delete(ldentity: name, Data::type : type, u64: type_tag); ## Security

When implementing steps (i) to (vii), the inclusion of the version number will provide resistance to replay attacks.

### GetKey removal

The removal and validation of client keys is also a significant reduction in complexity and means instead of lookups to get keys; these keys are included as part of the data. This makes the data self validating and reduces security risks from Spartacus type attacks. Moreover, it also removes ability for any key replacement attack on data.

### Drawbacks

This will put a heavier requirement on Refresh calls on the network in times of churn, rather than transferring only keys and versions, which may be small, Moreover, this will require sending up to 100kB per StructuredData element. If content is always held as immutable data, then it is not transferred at every churn event. The user will in such case also have more work as when the StructuredData type is larger than 100kB; it then has to self_encrypt the remainder and store the datamap in the data filed of the StructuredData.

Alternatives are as follows:
*Status quo* is an option and realistic:
(a) Another option posed by Qi is that structured data types be directly stored on ManagedNodes (PmidNode); this would reduce churn issues, but may introduce a security concern as there is not trust a Pmidnode not to lie or replay, and it potentially can with data that is mutable and not intrinsically validatable as accurate.
(b) Another possibility by Qi is the PmidManager (NodeManager) stores the data size separately from the immutableData size.

Modifications to embodiments of the disclosure described in the foregoing are possible without departing from the scope of the invention as defined by the accompanying claims. Expressions such as "including", "comprising", "incorporating", "consisting of", "have", "is" used to describe and claim the present invention are intended to be construed in a non-exclusive manner, namely allowing for items, components or elements not explicitly described also to be present. Reference to the singular is also to be construed to relate to the plural. Numerals included within parentheses in the accompanying claims are intended to assist understanding of the claims and should not be construed in any way to limit subject matter claimed by these claims.

## Claims

1. A data system (10) for providing data communication and data storage, wherein the data system (10) includes at least one user device (30) and a configuration of nodal elements (40) which is operable to communicate with the at least one user device (30), wherein the at least one user device (30) includes at least one wireless communication device (400) and one or more user-wearable device (410), wherein the at least one wireless communication device (400) is operable to communicate with the one or more user-wearable devices (410); **characterized in that**
the data system (10) is operable to communicate data which have been encrypted and obfuscated and are defined by one or more data maps that also indicate the manner in which the data have been encrypted and obfuscated
the one or more user-wearable devices (410) is operable to execute primary data chunking to generate primary data chunks, and data obfuscating between the primary data chunks to generate primary obfuscated data chunks, for communicating data from the one or more user-wearable devices (410) to the at least one wireless communication device (400), and to generate information indicative of the manner in which the data have been partitioned and obfuscated, and to include the generated information in a first data map which is stored; and
the at least one wireless communication device (400) is operable to execute secondary data chunking to the primary obfuscated data chunks to generate secondary data chunks, and data obfuscating between the secondary data chunks to generate secondary obfuscated data chunks for transmission from the at least one wireless communication device (400) to one or more nodal elements (40) of the data system (10), and to generate information indicative of the manner in which the data have been partitioned and obfuscated, and to include the generated information in a second data map which is stored.

2. A data system (10) as claimed in claim 1, wherein the at least one wireless communication device (400) is spatially locally coupled to at least one user-wearable device (410

3. A data system (10) as claimed in claim 2, wherein the at least one user-wearable device (410) includes at least one sensor for sensing in a spatial region of the at least one user-wearable device (410), and for communicating corresponding sensor data from the at least one user-wearable device (410) via the at least one wireless communication device (400) for storage at one or more nodal elements (40) of the data system (10).

4. A data system (10) as claimed in claim 1, wherein the at least one user-wearable device (410) are configured for cryptocurrency payment.

5. A method of communicating data within a data system (10) for providing data communication, wherein the data system (10) includes at least one user device (30) and a configuration of nodal elements (40) which is operable to communicate with the at least one user device (30), wherein the at least one user device (30) includes at least one wireless communication device (400) and one or more user-wearable devices (410), and the at least one wireless communication device (400) is operable to communicate with the one or more user-wearable devices (410); **characterized in that** the method includes
(ii) operating the one or more user-wearable devices (410) to execute primary data chunking to generate primary data chunks, and data obfuscating between the primary data chunks to generate primary obfuscated data chunks, for communicating data from the one or more user-wearable devices (410) to the at least one wireless communication device (400) and to generate information indicative of the manner in which the data have been partitioned and obfuscated, and to include the generated information in a first data map which is stored; and
(iii) operating the at least one wireless communication device (400) to execute secondary data chunking of the primary obfuscated data chunks to generate secondary data chunks, and data obfuscating between the secondary data chunks to generate secondary obfuscated data chunks and to transmit the secondary obfuscated data chunks from the at least one wireless communication device (400) to one or more nodal elements (40) of the data system (10) and to generate information indicative of the manner in which the data have been partitioned and obfuscated, and to include the generated information in a second data map which is stored.

6. A method as claimed in claim 5, wherein the at least one wireless communication device (400) is spatially locally coupled to at least one user-wearable device (410).

7. A method as claimed in claim 5, wherein the method includes configuring the at least one user-wearable device (410) for cryptocurrency payment.

8. A method as claimed in any one of claims 5 to 7, wherein the method further includes: supplying secondary obfuscated data chunks from one or more of the nodal elements to another user device; and providing the another user device with access to the first and second data maps for reconstituting data from the supplied secondary obfuscated data chunks.

## Patentansprüche

1. Datensystem (10) zum Bereitstellen von Datenaustausch und Datenspeicherung, wobei das Datensystem (10) mindestens eine Benutzereinheit (30) und eine Anordnung von Knotenelementen (40) aufweist, die so einsetzbar ist, dass sie mit der mindestens einen Benutzereinheit (30) Daten austauscht, wobei die mindestens eine Benutzereinheit (30) mindestens eine drahtlose Datenaustauscheinheit (400) sowie eine oder mehrere von einem Benutzer tragbare Einheiten (410) aufweist, wobei die mindestens eine drahtlose Datenaustauscheinheit (400) so einsetzbar ist, dass sie mit der einen oder den mehreren von einem Benutzer tragbaren Einheiten (410) Daten austauscht; **dadurch gekennzeichnet, dass**
das Datensystem (10) so einsetzbar ist, dass es Daten austauscht, die verschlüsselt und obfuskiert wurden und durch eine oder mehrere Datenübersichten definiert sind, die auch die Art und Weise angeben, wie die Daten verschlüsselt und obfuskiert wurden;
die eine oder die mehreren von einem Benutzer tragbare Einheiten (410) so einsetzbar sind, dass sie eine primäre Datengruppierung zum Erzeugen primärer Datenblöcke sowie eine Datenobfuskation zwischen den primären Datenblöcken zum Erzeugen von primären obfuskierten Datenblöcken für den Austausch von Daten von der einen oder den mehreren von einem Benutzer tragbaren Einheiten (410) an die mindestens eine drahtlose Datenaustauscheinheit (400) ausführen und sie Informationen erzeugen, die die Art und Weise angeben, wie die Daten unterteilt und obfuskiert wurden, und sie die erzeugten Informationen in eine erste Datenübersicht aufnehmen, die gespeichert wird; und
die mindestens eine drahtlose Datenaustauscheinheit (400) so einsetzbar ist, dass sie eine sekundäre Datengruppierung an den primären obfuskierten Datenblöcken zum Erzeugen von sekundären Datenblöcken sowie eine Datenobfuskation zwischen den sekundären Datenblöcken zum Erzeugen von sekundären obfuskierten Datenblöcken für die Übertragung von der mindestens einen drahtlosen Datenaustauscheinheit (400) an ein oder mehrere Knotenelemente (40) des Datensystems (10) ausführen und sie Informationen erzeugen, die die Art und Weise angeben, wie die Daten unterteilt und obfuskiert wurden, und sie die erzeugten Informationen in eine zweite Datenübersicht aufnehmen, die gespeichert wird.

2. Datensystem (10) nach Anspruch 1, wobei die mindestens eine drahtlose Datenaustauscheinheit (400) räumlich lokal mit mindestens einer von einem Benutzer tragbaren Einheit (410) verbunden ist.

3. Datensystem (10) nach Anspruch 2, wobei die mindestens eine von einem Benutzer tragbare Einheit (410) mindestens einen Sensor zum Erfassen in einem räumlichen Bereich der mindestens einen von einem Benutzer tragbaren Einheit (410) sowie zum Austauschen entsprechender Sensordaten von der mindestens einen von einem Benutzer tragbaren Einheit (410) über die mindestens eine drahtlose Datenaustauscheinheit (400) zum Speichern an einem oder mehreren Knotenelementen (40) des Datensystems (10) aufweist.

4. Datensystem (10) nach Anspruch 1, wobei die mindestens eine von einem Benutzer tragbare Einheit (410) zur Zahlung mit einer Kryptowährung ausgelegt ist.

5. Verfahren zum Austauschen von Daten innerhalb eines Datensystems (10) zum Bereitstellen eines Datenaustauschs, wobei das Datensystem (10) mindestens eine Benutzereinheit (30) und eine Anordnung von Knotenelementen (40) aufweist, die so einsetzbar ist, dass sie mit der mindestens einen Benutzereinheit (30) Daten austauscht, wobei die mindestens eine Benutzereinheit (30) mindestens eine drahtlose Datenaustauscheinheit (400) sowie eine oder mehrere von einem Benutzer tragbare Einheiten (410) aufweist, und die mindestens eine drahtlose Datenaustauscheinheit (400) so einsetzbar ist, dass sie mit der einen oder den mehreren von einem Benutzer tragbaren Einheiten (410) Daten austauscht; **dadurch gekennzeichnet, dass** das Verfahren Folgendes umfasst:
(ii) Einsetzen der einen oder der mehreren von einem Benutzer tragbaren Einheiten (410) derart, dass sie eine primäre Datengruppierung zum Erzeugen von primären Datenblöcken sowie eine Datenobfuskation zwischen den primären Datenblöcken zum Erzeugen von primären obfuskierten Datenblöcken für das Senden von Daten von der einen oder den mehreren von einem Benutzer tragbaren Einheiten (410) an die mindestens eine drahtlose Datenaustauscheinheit (400) ausführen und sie Informationen erzeugen, die die Art und Weise angeben, wie die Daten unterteilt und obfuskiert wurden, und sie die erzeugten Informationen in eine erste Datenübersicht aufnehmen, die gespeichert wird; und
(iii) Einsetzen der mindestens einen drahtlosen Datenaustauscheinheit (400) derart, dass sie eine sekundäre Datengruppierung der primären obfuskierten Datenblöcke zum Erzeugen von sekundären Datenblöcken sowie eine Datenobfuskation zwischen den sekundären Datenblöcken zum Erzeugen von sekundären obfuskierten Datenblöcken ausführt und sie die sekundären obfuskierten Datenblöcke von der mindestens einen drahtlosen Datenaustauscheinheit (400) an ein oder mehrere Knotenelemente (40) des Datensystems (10) überträgt und sie Informationen erzeugt, die die Art und Weise angeben, wie die Daten unterteilt und obfuskiert wurden, und sie die erzeugten Informationen in eine zweite Datenübersicht aufnimmt, die gespeichert wird.

6. Verfahren nach Anspruch 5, wobei die mindestens eine drahtlose Datenaustauscheinheit (400) räumlich lokal mit mindestens einer von einem Benutzer tragbaren Einheit (410) verbunden ist.

7. Verfahren nach Anspruch 5, wobei das Verfahren ein Auslegen der mindestens einen von einem Benutzer tragbaren Einheit (410) zur Zahlung mit einer Kryptowährung umfasst.

8. Verfahren nach einem der Ansprüche 5 bis 7, wobei das Verfahren ferner Folgendes umfasst: Bereitstellen von sekundären obfuskierten Datenblöcken von einem oder mehreren der Knotenelemente für eine weitere Benutzereinheit; sowie Gewährleisten von Zugang der einen weiteren Benutzereinheit zur ersten und zweiten Datenübersicht zum Wiederherstellen von Daten aus den bereitgestellten sekundären obfuskierten Datenblöcken.

## Revendications

1. Système de données (10) destiné à assurer une communication de données et un stockage de données, le système de données (10) comprenant au moins un dispositif utilisateur (30) et une configuration d'éléments nodaux (40), qui peut être exploitée pour communiquer avec le ou les dispositifs utilisateurs (30), le ou les dispositifs utilisateurs (30) comprenant au moins un dispositif de communication sans fil (400) et un ou plusieurs dispositifs portables (410), le ou les dispositifs de communication sans fil (400) pouvant être exploités pour communiquer avec le ou les dispositifs portables (410) ; **caractérisé en ce que**
le système de données (10) peut être exploité pour communiquer des données qui ont été chiffrées et obscurcies, et qui sont définies par une ou plusieurs cartes de données, qui indiquent aussi la manière dont les données ont été chiffrées et obscurcies ;
le ou les dispositifs portables (410) peuvent être exploités pour exécuter une mémorisation par blocs de données primaires dans le but de générer des blocs de données primaires, et un obscurcissement des données entre les blocs de données primaires, dans le but de générer des blocs de données obscurcies primaires, pour communiquer des données du ou des dispositifs portables (410) au ou aux dispositifs de communication sans fil (400), et de générer des informations indiquant la manière dont les données ont été découpées et obscurcies, et d'inclure les informations générées dans une première carte de données, qui est stockée ; et
le ou les dispositifs de communication sans fil (400) peuvent être exploités pour exécuter une mémorisation par blocs de données secondaires des blocs de données obscurcies primaires, dans le but de générer des blocs de données secondaires, et un obscurcissement des données entre les blocs de données secondaires dans le but de générer des blocs de données obscurcies secondaires pour transmission du ou des dispositifs de communication sans fil (400) au ou aux éléments nodaux (40) du système de données (10), et de générer des informations indiquant la manière dont les données ont été découpées et obscurcies, et d'inclure les informations générées dans une seconde carte de données, qui est stockée.

2. Système de données (10) selon la revendication 1, dans lequel le ou les dispositifs de communication sans fil (400) sont spatialement localement couplés à au moins un dispositif portable (410).

3. Système de données (10) selon la revendication 2, dans lequel le ou les dispositifs portables (410) comprennent au moins un capteur destiné à capter dans une région spatiale du ou des dispositifs portables (410) et à communiquer les données de capteur correspondantes, à partir du ou des dispositifs portables (410), par l'intermédiaire du ou des dispositifs de communication sans fil (400), pour stockage au niveau d'un ou plusieurs éléments nodaux (40) du système de données (10).

4. Système de données (10) selon la revendication 1, dans lequel le ou les dispositifs portables (410) sont conçus pour un paiement par une cybermonnaie.

5. Procédé de communication de données au sein d'un système de données (10) destiné à fournir une communication de données, dans lequel le système de données (10) comprend au moins un dispositif utilisateur (30) et une configuration d'éléments nodaux (40) qui peuvent être exploités pour communiquer avec le ou les dispositifs utilisateurs (30), le ou les dispositifs utilisateurs (30) comprenant au moins un dispositif de communication sans fil (400) et un ou plusieurs dispositifs portables (410), et le ou les dispositifs de communication portable (400) pouvant être exploités pour communiquer avec le ou les dispositifs portables (410), **caractérisé en ce que** le procédé comprend
(ii) l'exploitation du ou des dispositifs portables (410) pour exécuter une mémorisation par blocs de données primaires dans le but de générer des blocs de données primaires, et un obscurcissement des données entre les blocs de données primaires dans le but de générer des blocs de données obscurcies primaires, pour communiquer des données du ou des dispositifs portables (410) au ou aux dispositifs de communication sans fil (400), et de générer des informations indiquant la manière dont les données ont été découpées et obscurcies, et d'inclure des informations générées dans une première carte de données, qui est stockée ; et
(iii) l'exploitation du ou des dispositifs de communication sans fil (400) pour exécuter une mémorisation par blocs de données secondaires des blocs de données obscurcies primaires dans le but de générer des blocs de données secondaires, et un obscurcissement des données entre les blocs de données secondaires dans le but de générer des blocs de données obscurcies secondaires et de transmettre les blocs de données obscurcies secondaires du ou des dispositifs de communication sans fil (400) à un ou plusieurs éléments nodaux (40) du système de données (10), et de générer des informations indiquant la manière dont les données ont été découpées et obscurcies, et d'inclure les informations générées dans une seconde carte de données, qui est stockée.

6. Procédé selon la revendication 5, dans lequel le ou les dispositifs de communication sans fil (400) sont spatialement localement couplés à au moins un dispositif portable (410).

7. Procédé selon la revendication 5, le procédé comprenant la configuration du ou des dispositifs portables (410) pour un paiement par une cybermonnaie.

8. Procédé selon l'une quelconque des revendications 5 à 7, le procédé comprenant en outre la fourniture de blocs de données obscurcies secondaires d'un ou plusieurs éléments nodaux à un autre dispositif utilisateur, et la fourniture, à l'autre dispositif utilisateur, d'un accès à la première et à la seconde cartes de données, pour reconstitution des données à partir des blocs de données obscurcies secondaires fournies.
